# EUROPÄISCHE PATENTSCHRIFT

(11) **EP 1 306 012 B1**
(45) Veröffentlichungstag und Bekanntmachung des Hinweises auf die Patenterteilung: **11.07.2007**
(21) Anmeldenummer: 02022599.1
(22) Anmeldetag: 09.10.2002
(51) Int. Cl.: A23G 3/02, A23G 3/20

(54) **Verfahren und Vorrichtung zum Formen eines Körpers aus gekochter Zuckermasse in einer Form**
Process and apparatus for shaping a boiled candy body in a mould
Pocédé et appareil de moulage de corps en sucre cuit dans un moule

(30) Priorität: 23.10.2001 DE 10152289
(43) Veröffentlichungstag der Anmeldung: 02.05.2003
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- EP-A- 0 715 813
- EP-A- 0 776 608
- EP-A- 0 920 810
- EP-A- 1 002 464
- EP-A- 1 072 195
- DE-C- 872 149
- GB-A- 207 974
- GB-A- 1 483 614
- US-A- 2 674 960

## Beschreibung

Die Erfindung betrifft ein Verfahren zum Herstellen eines verzehrbaren Formkörpers aus gekochter Zuckermasse in einer Form. Dabei wird die Zuckermasse in fließfähigem Zustand in die zumindest bereichsweise aus elastischem Material bestehende Form gegossen. Die Zuckermasse wird in der Form zur Verfestigung gebracht. Der verfestigte Formkörper wird aus der Form ausgeworfen. Es wird auch eine Vorrichtung zum Herstellen eines Formkörpers aus gekochter Zuckermasse in einer zumindest bereichsweise aus elastischem Material bestehenden Form aufgezeigt, die zum Einbringen der Zuckermasse in fließfähigem Zustand oben offen ausgebildet ist.

Der in dieser Anmeldung verwendete Begriff "gekochte Zuckermasse" ist weit zu verstehen. Es handelt sich um alle bei Raumtemperatur in der Regel mittelfesten oder harten Zuckermassen der Süßwarenindustrie, die wenigstens einen bedeutsamen Anteil an Zuckermasse enthalten, gekocht werden und die sich unter Einwirkung von Wärme in einem flüssigen, gießbaren Zustand befinden. Dabei wird der Zucker zunächst in Wasser gelöst und mit den übrigen Zutaten vermischt. Durch das folgende Kochen wird der Zuckerlösung ein Großteil des Wassers wieder entzogen. Die verbleibende Masse ist in heißem Zustand dann noch fließ- und verformungsfähig. Bei Abkühlung verfestigen sich diese Zuckermassen wieder und nehmen eine feste Gestalt an. Zu solchen gekochten Zuckermassen gehören insbesondere Bonbonmassen für Hart- und Weichbonbons, aber auch Karamellmassen, Fondantmassen, Fruchtmassen, Gelees und Nougatmassen. Es sollen schalenartige Formkörper aus einer gekochten Zuckermasse hergestellt werden. Die dabei entstehende feste Schale ist meist nur als Teilprodukt anzusehen. Sie wird in der Regel mit einer oder mehreren weiteren Massen gefüllt, gedeckelt oder sonst wie zu dem verzehrbaren Produkt der Süßwarenindustrie weiterverarbeitet.

Ein Verfahren und eine Vorrichtung zum Herstellen eines massiven Formkörpers aus einer härtbaren plastischen Masse, insbesondere aus gekochter Zuckermasse, ist aus der DE 872 149 bekannt. Es wird eine Gießform aus Gummi eingesetzt, die einen formbeständigen Außenrand und einen ebenfalls formbeständigen Boden und einen beide formbeständige Teile verbindenden elastisch nachgiebigen Wandteil aufweist. Die Form besteht damit zumindest bereichsweise aus Gummi. Zur Herstellung der massiven Formkörper wird die Form mit der Zuckermasse in fließfähigem Zustand gefüllt. Die Zuckermasse wird in der Form durch natürliche Abkühlung verfestigt. Die Form mit dem verfestigten Formkörper wird gewendet und der Formkörper aus der Form ausgeworfen. Beim Auswerfen werden die elastischen Eigenschaften der Form genutzt. Die formstabilen Bestandteile der Form tragen dazu bei, dass der auszuwerfende Formkörper nicht beschädigt wird, sondern in seiner Gestalt erhalten bleibt.

Aus der GB-A-1 483 614 ist ein Verfahren und eine Vorrichtung zum Herstellen eines schalenartigen Formkörpers aus Süßwarenmasse bekannt. Die Süßwarenmasse wird flüssig in eine Form gegossen, die wahlweise aus festem oder flexiblem Material besteht. Sofern die Form aus flexiblem Material besteht, ist eine Stützform zum Abstützen der Form während des Verdrängens der Süßwarenmasse vorgesehen. Die Form wird nur zu einem solchen Teil gefüllt, wie es der Menge zur Herstellung des schalenartigen Formkörpers entspricht. Die Süßwarenmasse wird mit einem in die Form eintauchenden Stempel entlang der Wandung der Form verdrängt und zwischen Stempel und Form verfestigt. Nach der Verfestigung wird die relativ dickwandige Form aus festem oder flexiblem Material gewendet und der Formkörper ausgeschlagen. In dem Stempel befindet sich ein zentrales Loch, durch welches Luft geblasen wird, um den Stempel von dem Formkörper zu lösen und zu verhindern, dass der Stempel bei seiner Rückbewegung den Formkörper nach oben mitnimmt. Auch in der Form befinden sich kleine Löcher, durch die während des Ausschlagens Luft geblasen wird, um das Lösen des Formkörpers aus der Form zu begünstigen.

Aus der GB 207 974 ist eine Vorrichtung bekannt, mit der schalenartige Formkörper aus fetthaltiger Masse, insbesondere Schokolademasse, herstellbar sind. Dabei wird die Masse in fließfähigem Zustand in die oben offene Form eingefüllt. Die Form besteht aus einem festen, nicht verformbaren Körper, insbesondere Metall. Die Form wird teilgefüllt mit einer solchen Menge an Masse, wie sie für die Herstellung der Schale festgelegt ist. In die von oben offene Form wird ein Stempel so auf die noch flüssige Masse abgesenkt, dass die Masse den Zwischenraum zwischen dem Stempel und der nach oben offenen Form bis zum Rand ausfüllt. Der Stempel ist dabei an einen Kühlkreislauf angeschlossen, um auf diese Art und Weise die Schokolademasse abzukühlen und zur Verfestigung zu bringen. Problematisch ist dabei, dass die Masse in fließfähigem Zustand bis hin zur Erstarrung der Schale mit dem von oben einwirkenden Stempel direkt in Kontakt kommt. Um die verfestigte Schale überhaupt von dem Stempel lösen zu können, wird der Stempel mit einem Schmiermittel versehen, welches eine Flüssigkeit oder eine Lösung sein kann. Alkohole, Terpene, essbare Paraffine aber auch Wasser und Gelatine sind als solche Trennmittel genannt. Diese Trennmittel werden im Bereich des Stempels angewendet. Die Form wird nicht gekühlt und offensichtlich auch nicht mit einem Trennmittel behandelt. Schalenartige Formkörper aus zuckerhaltiger Masse lassen sich mit dieser bekannten Vorrichtung nicht herstellen. Sie hängen oft in der festen Form und am Stempel fest, lassen sich also nicht reproduzierbar entformen. Es besteht die Gefahr, dass insbesondere dünnwandige schalenartige Formkörper bei der Entformung und/oder beim Auswerfen beschädigt werden.

Die EP 0 589 820 A1 zeigt ein Verfahren zur Herstellung von schalenartigen Hohlkörpern aus Schokolade oder einer anderen fetthaltigen Masse. Auch hier wird die fetthaltige Masse in fließfähigem Zustand in eine feste Form gegossen. Die Form besteht vorzugsweise aus hartem Polycarbonat. Auch hier wird ein auf- und ab beweglicher Stempel, der an einen Kühlkreislauf angeschlossen ist, in die flüssige in der Form befindliche Masse abgesenkt. Der Stempel hat dabei eine niedrigere Temperatur als 0 °C und verbleibt in der durch ihn verdrängten Masse für eine gewisse Zeit, meist zwischen einer und zehn Sekunden. Die Temperatur der Form soll geringer sein als die Temperatur der Masse. Schokolademassen und andere fetthaltige Massen, die beim Erstarren kontrahieren, lassen sich bekanntermaßen relativ leicht aus einer Form entfernen. Dies geschieht durch Wenden der Form und durch Ausschlagen. Mit diesem Verfahren lassen sich Schalen mit sehr gleichmäßiger Wandstärke herstellen. Die Schalen sollen sich auch von dem Stempel leicht lösen, wenn er stark gekühlt wird.

Auch die DE 197 32 036 A1 beschäftigt sich mit der Herstellung von schalenartigen Formkörpern aus fetthaltigen Massen. Beispielhaft wird hier eine äußere Fettschale von Hundefutter, eine Schokoladenschale o. ä. genannt. Die Herstellung solcher Verzehrgüter mit einer äußeren Schale erfolgt im Fließpressverfahren durch einen in eine Form eintauchenden temperierten Stempel. Wenn solche Stempel bis auf eine Temperatur unter 0 °C abgekühlt werden, entsteht beim Arbeiten unter Umgebungstemperatur auf der Oberfläche des Stempels eine hauchdünne Eisschicht, die als Trennmittel zwischen Stempel und Schokolademasse wirkt. Durch diese dünne Eisschicht kann es zu einer Fleckenbildung kommen, was unerwünscht ist. Um diese Fleckenbildung zu vermeiden, wird der Taupunkt der das Verzehrgut umgebenden Atmosphäre unter der Temperatur des Stempels gehalten. Durch die Wahl besonderer Materialien, beispielsweise Kupfer und Silber, für bestimmte Teile des Stempels und/oder der Form wird versucht, den Wärmetransport zu begünstigen und die Fleckenbildung zu vermeiden.

All dieser Stand der Technik mit Ausnahme des gattungsbildenden Standes der Technik bezieht sich auf die Verarbeitung von fetthaltigen Massen, insbesondere Schokolademasse. Gekochte Zuckermassen haben im Gegensatz dazu ungleich problematischere Eigenschaften. Sie haften wesentlich fester in der Form und lassen sich daher wesentlich schlechter aus der Form auswerfen. Soweit gekochte Zuckermassen verarbeitet werden, geht es dabei immer um die Herstellung massiver Formkörper. Es ist kein technisch brauchbares Verfahren zur Herstellung schalenartiger Formkörper aus gekochter Zuckermasse bekannt. So zeigt auch der Prospekt der Anmelderin "Candymaster", mit dem Druckdatum 2/99, puderlose Gießanlagen für Hartzuckerprodukte, bei denen feste Formen aus Aluminium-Druckguss, mit Polytetrafluorethylen beschichtet, eingesetzt werden. Die massiven Formkörper werden nach dem Erstarren mit Ausstoßern aus der Form herausgedrückt, die den Boden der Form durchsetzen. Zum puderlosen Gießen von Produkten aus niedrig gekochten Zuckermassen, wie Fondant, Karamell, Toffee, Fudge etc., werden auch bereits flexible Formen aus Silikon-Kautschuk eingesetzt. Diese Formen weisen eine erhebliche Wandstärke auf, lassen aber eine Verformung im Zusammenspiel mit einem Auswerfer zu. Auf diese Weise können massive Formkörper auch aus zwei oder mehreren gemeinsam in die Form eingegossenen Massen hergestellt werden. Der Füllungsgrad, also der volumenmäßige Anteil der inneren eingeschlossenen Masse, ist begrenzt. Die äußere Masse bildet zwar letztlich einen schalenartigen Behälter, der jedoch eine erhebliche Wandstärke besitzt. Dünnwandige schalenartige Formkörper mit gestaltverfestigter definierter innerer Oberfläche lassen sich damit nicht herstellen.

Der Erfindung liegt die Aufgabe zugrunde, ein Verfahren und eine Vorrichtung zum Herstellen auch empfindlicher schalenartiger Hohlkörper aus gekochter Zuckermasse bereitzustellen, bei denen die Problematik des Anhaftens und Ablösens der Zuckermasse bzw. Schale an einem Stempel gelöst ist und sich die verfestigte Schale auch bei schwierig zu handhabenden Zuckermassen aus der Form ausbringen lässt.

Erfindungsgemäß wird dies bei dem Verfahren der eingangs beschriebenen Art dadurch erreicht, dass zur Herstellung eines schalenartigen Formkörpers eine membranartig ausgebildete Form aus elastischem, rückstellfähigen Material eingesetzt wird, die mit der gekochten Zuckermasse in fließfähigem Zustand nur zu einem solchen Teil gefüllt wird, wie es der Menge der Zuckermasse zur Herstellung des schalenartigen Formkörpers entspricht. Die Zuckermasse wird mit einem in die Form eintauchenden Stempel entlang der Wandung der Form verdrängt und zwischen Stempel und Form verfestigt. Das Auswerfen des schalenartigen Formkörpers erfolgt unter Durchstülpen der Form aus dem elastischen Material.

Die Erfindung geht von dem Gedanken aus, schalenartige Formkörper aus gekochter Zuckermasse durch Fließpressen unter Verwendung von membranartig ausgebildeten Formen aus elastischem, rückstellfähigem Material herzustellen. Dabei wird die Grenze zwischen den schokoladeartigen fetthaltigen Massen und den gekochten Zuckermassen überschritten. Schokolademassen kontrahieren beim Abkühlen und Verfestigen bekanntlich, was beim Trennen der Formkörper aus der Form und beim Auswerfen der Formkörper genutzt wird. Zuckermassen besitzen solche Eigenschaften bekanntermaßen nicht, so dass es sich für einen Fachmann an sich verbietet, bei der Herstellung schalenartiger Formkörper aus gekochter Zuckermasse sich an der Herstellung schalenartiger Hohlkörper aus Schokolademasse zu orientieren. Die Erfindung geht aber trotzdem diesen Weg und nutzt die Verwendung elastischer Formen in zweifacher Weise, nämlich einmal zu einem erleichterten Trennen des empfindlichen schalenartigen Formkörpers von der Form und dem Stempel und zum anderen zum Auswerfen des schalenartigen Formkörpers. Beide Schritte werden mehr oder weniger gleichzeitig in enger zeitlicher Abstimmung zueinander durchgeführt. Durch die Verwendung einer dünnwandigen membranartigen Form ist es gleichzeitig möglich, einen empfindlichen schalenartigen Formkörper von der Form zu trennen und auszuwerfen, ohne dass dabei eine Beschädigung eintritt. Sinnvoll ist es, wenn dabei der schalenartige Formkörper vor dem Trennen und Auswerfen mit einer weiteren Masse zumindest teilgefüllt wird. Dadurch wird der empfindliche schalenartige Formkörper von innen ausgesteift. Die eingesetzten Formen aus elastischem Material können insbesondere aus Silikon bestehen und sind zumindest bereichsweise so dünnwandig ausgebildet, dass beim Auswerfen der schalenartigen Formkörper ein Durchstülpvorgang der Form erfolgt. Dieser Durchstülpvorgang kann beendet werden, sobald sich der schalenartige Formkörper von der Form gelöst hat. Das elastische Material der Form besitzt auch ein entsprechendes Rückstellvermögen, d. h. die Formen nehmen nach dem teilweisen Durchstülpen ihre Ausgangsstellung automatisch wieder ein.

Von besonderer Bedeutung ist, dass eine membranartige Form aus elastischem, rückstellfähigem Material eingesetzt wird, die zumindest während der Verdrängung der Masse durch den in die Form eintauchenden Stempel durch eine Stützform abgestützt wird. Die Stützform bildet zumindest teilweise die Form nach und stützt das elastische Material der Form insbesondere während des Eintauchens des Stempels in die Masse gestaltmäßig ab. Auf diese Art und Weise lassen sich sehr gleichmäßige Schalen mit über den Umfang übereinstimmender Dicke der Wandung herstellen. Während des Prägevorgangs der fließfähigen Zuckermasse in der Form durch den Stempel besteht dabei ein guter Kontakt zwischen der elastischen Zuckermasse und der Form und dem Stempel, so dass eine entsprechende Wärmeübertragung, wie sie zum Erstarren der gekochten Zuckermasse erforderlich ist, stattfinden kann.

Sinnvoll ist es, wenn die Stützform vor dem Auswerfen des schalenartigen Formkörpers entfernt wird. Die Form einerseits und die Stützform andererseits werden vor dem Auswerfen auseinandergefahren, so dass beispielsweise ein Ausstoßer an der elastischen Form angreifen kann. Dabei wird der schalenartige Formkörper mehr oder weniger gleichzeitig von der Form abgelöst und aus der Form ausgeworfen.

Bedeutsam ist es, dass der Stempel und/oder die Form und/oder die Stützform gekühlt wird. Zu diesem Zweck können diese Teile an einen oder mehrere Kühlkreisläufe angeschlossen sein. Die Temperierung der Kühlkreisläufe ist auf die Art und die Eigenschaften der entsprechenden Zuckermassen abzustimmen.

Sinnvoll ist es, wenn der schalenartige Formkörper mit einer oder mehreren weiteren Massen gefüllt, gedeckelt oder sonstwie zu dem verzehrbaren Produkt der Süßwarenindustrie weiterverarbeitet wird. Insbesondere kann ein solcher, von innen ausgesteifter schalenartiger Formkörper einer Überziehmaschine zugeführt und mit einer Schokolademasse überzogen werden. Aber auch der ungefüllte schalenartige Formkörper ist als verzehrbares Produkt geeignet.

Der Stempel kann zumindest während des Verdrängens der Zuckermasse in der Form rotierend angetrieben werden. Der Antrieb erfolgt im Bereich niedriger Drehzahlen und kann durch einen Vibrationsvorgang unterstützt werden.

Die neue Vorrichtung zum Herstellen eines Formkörpers aus gekochter Zuckermasse weist eine zumindest bereichsweise aus elastischem Material bestehende Form auf, die zum Einbringen der Zuckermasse in fließfähigem Zustand oben offen ausgebildet ist. Erfindungsgemäß ist auf der der Zuckermasse zugekehrten Seite der Form ein hubartig angetriebener Stempel zum temporären Verdrängen der Zuckermasse in der Form vorgesehen. Die Form aus elastischem, rückstellfähigem Material ist membranartig ausgebildet. Es ist eine Stützform zum Abstützen der membranartigen Form während des Verdrängens der zuckerhaltigen Masse vorgesehen. Mit einer solchen Vorrichtung, die eine Form aus elastischem Material aufweist, lassen sich überraschenderweise auch dünnwandige Schalen aus gekochter Zuckermasse herstellen. Insbesondere hochgekochte Hartzuckermasse ist sehr spröde und druckempfindlich. Es überrascht, dass nunmehr auch vergleichsweise dünnwandige schalenartige Formkörper aus einer solchen hochgekochten harten Zuckermasse mit der neuen Vorrichtung herstellbar sind. Die Herstellung dünnwandiger Hohlkörper aus niedrig gekochter Weichzuckermasse ist weniger problematisch. Solche Weichzuckermassen sind Karamell, Toffee, Fudge, Fondant, Fruchtgelee oder Nougat.

Die Verwendung von elastischem rückstellfähigem Material für die Form erweist sich in mehrfacher Hinsicht als vorteilhaft. Insbesondere Silikon in dünnwandiger Gestaltung erleichtert sowohl das Trennen des Formkörpers von der Form als auch das Auswerfen.

Bei schwierig zu verarbeitenden, sehr klebrigen gekochten Zuckermassen empfiehlt es sich, dass der Stempel und/oder die membranartige Form mit einer das Ablösen des verfestigten schalenartigen Formkörpers begünstigenden Beschichtung versehen sind. Eine solche Beschichtung kann aus Polytetrafluorethylen oder einem ähnlichen Kunststoff bestehen.

Zur Verbesserung des Wärmeübergangs und um kurze Taktzeiten zu erreichen, kann der Stempel und/oder die membranartige Form und/oder die Stützform an einen Kühlkreislauf angeschlossen sein. Es können auch mehrere Kühlkreisläufe, die auch auf unterschiedlichen Temperaturen gefahren werden, vorgesehen sein, um gezielt unterschiedlich intensiv zu kühlen. Dabei ist darauf zu achten, dass die durch die Abkühlung verursachte Verfestigung im Innern des schalenartigen Formkörpers erst nach dem Verdrängen der Zuckermasse in den Spalt zwischen dem Stempel und der Form eintritt.

Wenn der Stempel, die Form und die Stützform so ausgebildet und aufeinander abgestimmt sind, dass der schalenartige Formkörper eine Wandstärke von etwa 2 mm erhält, lassen sich praktisch brauchbare und gut handhabbare Formkörper auch aus schwierigen gekochten Zuckermassen herstellen und verarbeiten. Solche schalenartigen Formkörper können dann mit einer oder mehreren weiteren Massen gefüllt werden. Vorteilhaft wird dabei ein erheblich höherer Füllungsgrad erreicht als beim gleichzeitigen Vergießen von zwei Zuckermassen in eine feste Form bei der Herstellung von massiven Formkörpern.

In bevorzugter Ausführungsform weist die Form zumindest einen elastisch verformbaren Bereich auf, der dünnwandig ausgebildet ist. Die Stützform kann ringförmig ausgebildet sein. Trotz der ringförmigen Ausbildung wird eine hinreichende Abstützung der elastischen Form während des Verdrängungsvorgangs der Zuckermasse durch den Stempel erreicht. Die Durchbrechung in der ringförmigen Stützform kann zur Unterbringung eines Auswerfers genutzt werden, der hubartig angetrieben sein kann, um den Durchstülpvorgang an der elastischen Form zu bewirken.

Die Erfindung wird anhand verschiedener Ausführungsbeispiele weiter erläutert und beschrieben. Es zeigen:
- Fig. 1: eine schematisierte Seitenansicht einer Vorrichtung zum Herstellen eines Formkörpers aus gekochter Zuckermasse in einer zumindest bereichsweise aus elastischem Material bestehenden Form,
- Fig.2: eine schematische Darstellung einer einzelnen Form im Querschnitt während des Einbringens der fließfähigen Zuckermasse,
- Fig. 3: die Form gemäß Fig. 2 nach dem Verteilen der Zuckermasse,
- Fig. 4: die Relativlage der Teile nach dem teilweisen Absenken des Stempels,
- Fig. 5: eine weitere Zwischenstellung,
- Fig. 6: eine Stellung der Teile während des Verdrängens und Verfestigens der Zuckermasse,
- Fig. 7: die noch in der Form befindliche und zu einem schalenartigen Formkörper erstarrte Zuckermasse,
- Fig. 8: eine ähnliche Darstellung wie Fig. 6, jedoch bei einer anderen Ausführungsform des Stempels,
- Fig. 9: eine weitere Ausführungsform der Form,
- Fig. 10: eine weitere Ausführungsform der Form,
- Fig. 11: eine Draufsicht auf die Form in einer ersten Gestalt,
- Fig. 12: eine Draufsicht auf die Form in einer zweiten Gestalt,
- Fig. 13: eine Draufsicht auf die Form in einer dritten Gestalt,
- Fig. 14: eine schematische Darstellung der Teile vor dem Eingießen einer Masse in den erstarrten schalenartigen Formkörper,
- Fig. 15: eine schematische Darstellung der Teile während des Eingießens der Masse in den erstarrten schalenartigen Formkörper,
- Fig. 16: die Form mit dem schalenartigen Formkörper und der zusätzlich eingebrachten Masse,
- Fig. 17: einen Querschnitt durch die Form nach einem Wendevorgang,
- Fig. 18: eine Querschnittsdarstellung der Teile unmittelbar während des Durchstülpens der Form und bei dem Auswurf des Produkts aus der Form,
- Fig. 19: eine schematische Darstellung der Teile nach dem Auswurf des Produkts, und
- Fig. 20: einen schematisierten Vertikalschnitt mit rotierend angetriebenen Stempel.

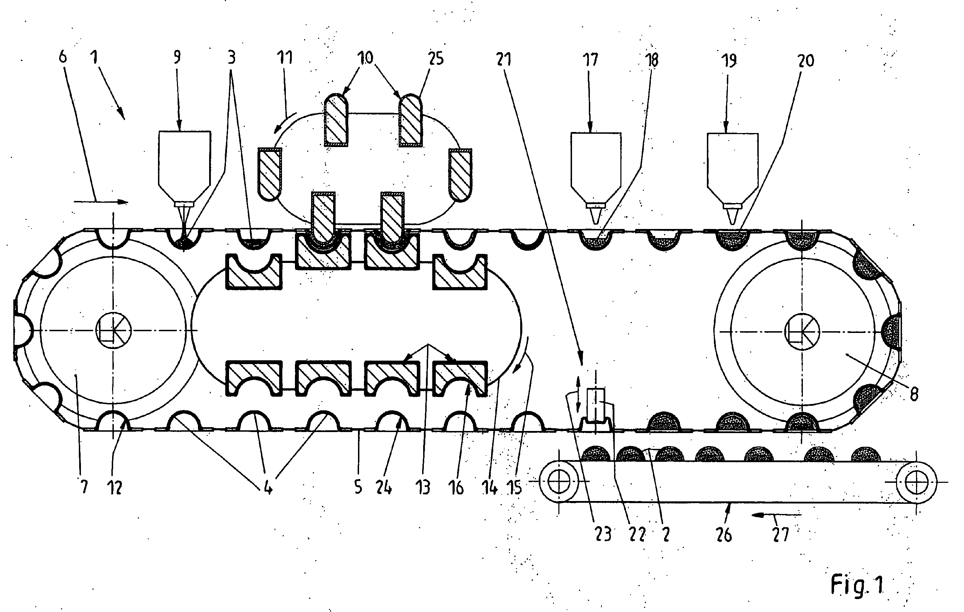

In Fig. 1 ist eine Vorrichtung 1 für die Herstellung von schalenartigen Formkörpern 2 aus gekochter Zuckermasse 3 dargestellt. Es sind eine Vielzahl Formen 4 vorgesehen, die eine napfartige Gestalt besitzen, von denen nur die Querschnittsdarstellung in Fig. 1 angegeben ist. Die Formen 4 sind auf einem endlosen Transportband 5 angeordnet, welches gemäß Pfeil 6 um zwei Umlenkräder 7 und 8 umlaufend angetrieben wird. Der Antrieb kann kontinuierlich oder taktweise erfolgen.

Im Bereich des oberen Trums ist eine Gießstation 9 zum Eingießen einer Portion gekochter Zuckermasse 3 in die Form 4 vorgesehen. Es ist erkennbar, dass die Form 4 nur teilweise mit Zuckermasse 3 gefüllt wird. Die jeweils eingegossene Portionsmenge ist auf die Ausbildung des schalenartigen Formkörpers, insbesondere auf dessen Wandstärke abgestimmt. Nachgeordnet zu der Gießstation kann eine Vibrations- oder Rüttelstation (nicht dargestellt) vorgesehen sein, um sicherzustellen, dass sich die eingegossene Portion der Zuckermasse 3 mit horizontal ausgerichtetem Spiegel gleichmäßig in der Form 4 verteilt.

Oberhalb der Formen 4 sind Stempel 10 vorgesehen, die gemäß Pfeil 11 umlaufend angetrieben sind. Der Antrieb der Stempel 10 ist auf den Antrieb der Formen 4 abgestimmt und erfolgt kontinuierlich oder taktweise. Dabei sind die Stempel 10 so angeordnet und geführt, dass sie von der offenen Seite in die Formen 4 eintreten und die eingegossene Portion gekochter Zuckermasse 3 an der Wandung 12 der Form 4 aufsteigend verdrängen. Die zueinander gehörigen Oberflächen der Formen 4 und der Stempel 10 sind zur Bildung einer gleichmäßigen Wandstärke des schalenartigen Formkörpers 2 aufeinander abgestimmt und angeordnet. Jeder Stempel 10 verbleibt in der Form 4 über eine gewisse Zeit, bis die vorher flüssige bzw. teigige Zuckermasse 3 zu dem Formkörper 2 erstarrt ist. Erst anschließend wird der jeweilige Stempel 10 nach oben aus der Form 4 bzw. dem Formkörper 2 herausgenommen.

In Zuordnung zu den Formen 4 und den Stempeln 10 sind eine Reihe von Stützformen 13 vorgesehen, die ebenfalls auf einem endlosen Transportorgan 14 gemäß Pfeil 15 umlaufend angetrieben werden. Die Stützformen 13 sind unterhalb der Formen 4 angeordnet. Sie besitzen Vertiefungen 16, deren Form an die Formgebung der Formen 4 und der Stempel 10 angepasst ist. Die Stützformen 13 dienen dazu, die Formen 4 während des Einwirkens der Stempel 10 und des Verdrängens der Zuckermasse 3 abzustützen. Die Formen 4 bestehen zumindest teilweise aus elastischem rückstellfähigem Material, wie Gummi, Silikon o. dgl.. Die Formen 4 können ganz oder zumindest teilweise aus diesem Material bestehen. Sie sind relativ dünnwandig ausgebildet, damit sie sich beim Auswerfen der schalenartigen Formkörper 2 durchdrücken und damit von den Formkörpern 2 leicht lösen lassen.

Nachfolgend im Transportweg ist eine weitere Gießstation 17, die dem Eingießen einer zweiten Masse 18 dient, die von dem schalenartigen Formkörper 2 aufgenommen wird. Es kann eine dritte Gießstation 19 vorgesehen sein, mit der eine weitere Masse 20, beispielsweise eine Deckelmasse, eingegossen wird. Die Anzahl der Gießstationen 17 und 19 ist beliebig. Es können auch nur schalenartige Hohlkörper 2 hergestellt werden, die als solche ein verzehrbares Produkt darstellen. Die Massen 18 und 20 erstarren während der Förderung der Formen 4 gemäß Pfeil 6. Es versteht sich, dass es auch möglich ist, an dieser Stelle einen Kühltunnel o. dgl. anzuordnen, um schwierig zu handhabende Massen, die mit vergleichsweise hoher Temperatur eingefüllt werden müssen, zur Erstarrung zu bringen.

Im Bereich des Umlenkrades 8 erfolgt das Wenden der Formen 4. Es ist hier eine Entformungsstation 21 mit einem Auswerfer 22 vorgesehen, der hubartig gemäß Pfeil 23 angetrieben wird. Der Auswerfer 22 verursacht einen Durchstülpvorgang der betreffenden Formen 4, wobei sich der schalenartige Formkörper 2 bzw. das erzeugte Produkt aus der Form 4 löst. Zum leichteren Lösen können die Formen 4 mit einer Beschichtung 24 versehen sein oder mit einem Trennmittel behandelt werden. Gleiches gilt für die Stempel 10. Auch auf deren Kontaktoberfläche kann eine Beschichtung 25 vorgesehen sein.

Die schalenartigen Formkörper 2 mit den ggf. eingefüllten Massen 18 und 20 gelangen in erstarrter Form als Produkte auf ein Austrageband 26, mit dem sie beispielsweise einem Kühltunnel und nachfolgend einer Verpackungsmaschine zugeführt werden. Das Austrageband 26 wird in Richtung des Pfeils 27 umlaufend angetrieben.

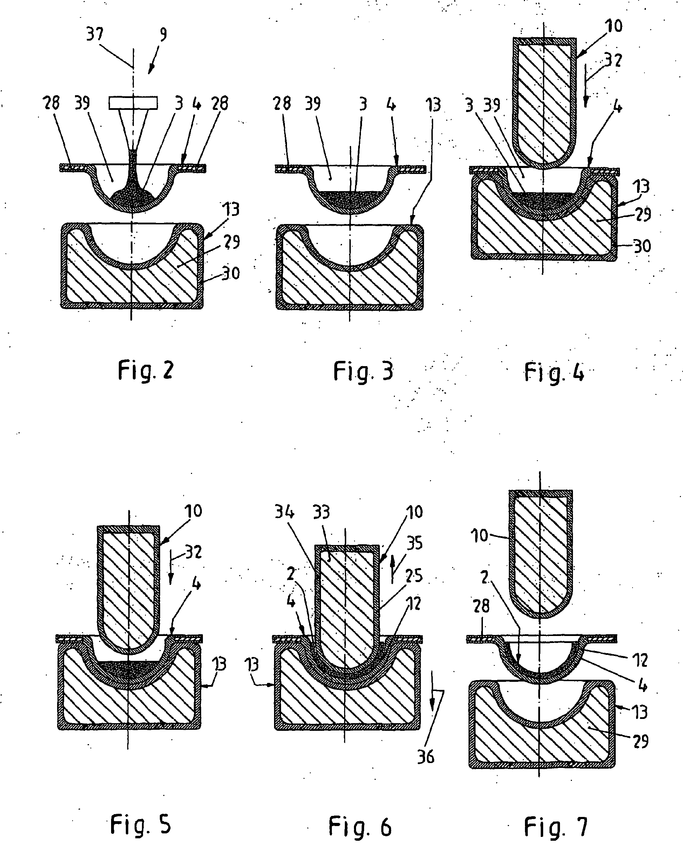

In den Fig. 2-7 ist die Formgebung der schalenartigen Formkörper 2 in einzelnen nacheinander erfolgenden Schritten nochmals verdeutlicht:

Fig. 2 zeigt die Stellung der Teile während des Eingießens einer entsprechenden Portion gekochter Zuckermasse 3 in die Vertiefung einer Form 4. Es ist erkennbar, dass die Form 4 membranartig dünnwandig ausgebildet ist. Sie besteht aus Silikon und weist lediglich in dem über die Vertiefung überstehenden Randbereich Verstärkungen 28 aus Metall auf. Die Verstärkungen 28 dienen zugleich der Lagerung und Verbindung der Formen 4 mit dem Transportband 5. Die zugehörige Stützform 13 befindet sich noch im Abstand zu der Form 4, kann aber auch bereits während des Eingießvorganges der Zuckermasse 3 die Form 4 von unten abstützen. Jede Stützform 13 besitzt einen Kern 29 aus Kunststoff und einen Mantel 30 aus Metall. Die Form 4 kann auch einen anderen Aufbau aufweisen, wie nachfolgend noch erläutert wird.

Fig. 3 zeigt die Relativlage der Teile, nachdem sich die Portion gekochter eingegossener Zuckermasse 3 gleichmäßig in der Form 4 verteilt hat. Die Stützform 13 wird dann gemäß Pfeil 31 hubartig nach oben gefahren, so dass sie die Unterseite der Form 4 abstützt, falls dies nicht bereits vor dem Eingießen der Zuckermasse 3 geschehen ist.

Dieser Hubvorgang der Stützform 13 nach oben ist in Fig. 4 beendet und es ist ein Stempel 10 dargestellt, der nun gemäß Pfeil 32 von oben durch die Öffnung der Form 4 nach unten abgesenkt wird. Fig. 5 zeigt eine Zwischenstellung der Teile bei fortgesetzter Bewegung des Stempels 10 gemäß Pfeil 32. Gemäß Fig. 6 ist die Endstellung des Stempels 10 in der Form 4 erkennbar. Diese Bewegung wird so gesteuert zu Ende gebracht, dass sich die eingegossene Portion gekochter Zuckermasse 3 in der Form 4 verlagert, dabei an der Wandung 12 der Form 4 aufsteigt und zu dem schalenartigen Formkörper 2 erstarrt. Auch der Stempel 10 kann aus einem Kern 33 aus Kunststoff und einem Mantel 34 aus Metall bestehen.

Nach dem Verfestigen der Zuckermasse 3 zu dem schalenartigen Formkörper 2 wird der Stempel 10 gemäß Pfeil 35 wieder angehoben, wobei er sich von dem Formkörper 2 löst. Hier kann die Beschichtung 25 hilfreich sein. Mehr oder weniger gleichzeitig oder auch zeitlich versetzt wird die Stützform 13 gemäß Pfeil 36 nach unten gefahren, also von der Unterseite der Form 4 entfernt. Der Endzustand dieser Bewegungen und die sich dann ergebende Relativlage ist in Fig. 7 dargestellt. Das Herauslösen bzw. Auswerfen der Formkörper 2 aus der Form 4 kann dann so erfolgen, wie dies in Verbindung mit Fig. 1 bereits beschrieben worden ist.

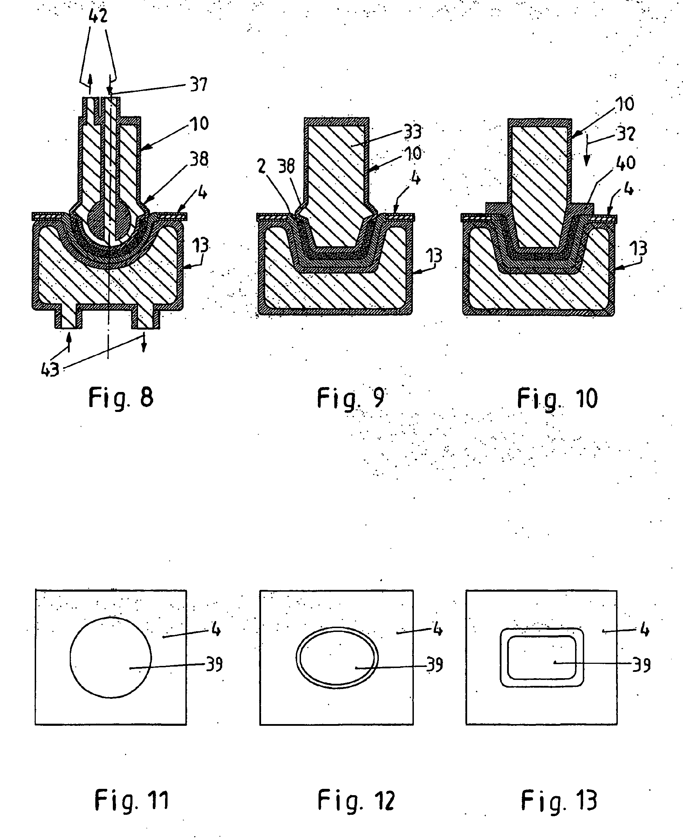

Die Formen 4 und die angepasste Formgebung der Stempel 10 und der Stützformen 13 ist in erster Linie rotationssymmetrisch zu einer Mittelachse 37 (Fig. 2) ausgeführt, so dass sich runde, napf- oder tassenartige Formkörper 2 herstellen lassen. Die damit herstellbaren Produkte können so ohne Weiteres die Form einer Praline, einer Kirsche o. dgl. bekommen. Für eine saubere Randausbildung der Formkörper 2 ist es im Allgemeinen ausreichend, auf eine gleichmäßige Verteilung der eingegossenen Portion der Zuckermasse 3 gemäß Fig. 3 zu achten. Zusätzlich besteht die Möglichkeit, wie in den Fig. 8-10 dargestellt, die Stempel 10 mit einem besonderen Randbereich 38 auszustatten, der nach außen vorstehend auf die Wandstärke des Formkörpers 2 und die Formgebung der Form 4 abgestimmt ist. Fig. 8 zeigt eine solche Ausbildung. Fig. 11 zeigt eine Draufsicht auf die leere Form 4 gemäß Fig. 8 mit einer Vertiefung 39, die zur Herstellung eines solchen etwa halbkugelförmigen Formkörpers 2 dient. Die Erfindung lässt sich aber nicht nur bei solchen rotationssymmetrischen Formkörpern 2 einsetzen. Die Fig. 9 und 12 zeigen eine Gestaltung für elliptisch-konisch gestaltete Produkte. Die Fig. 10 und 13 verdeutlichen eine mehr rechteckige Gestaltungsmöglichkeit mit abgerundeten Eckbereichen. Der Stempel kann hier einen sich nach außen erstreckenden Rand 40 aufweisen, der sich in der Endstellung auf die Oberseite der Form 4 aufsetzt, so dass der Rand des Formkörpers 2 abgeformt wird.

Anhand der Fig. 8 wird auch verdeutlicht, dass der Stempel 10 an einen Kühlkreislauf 42 angeschlossen sein kann. Im Kühlkreislauf 28 ist ein nicht dargestellter Regler vorgesehen, so dass der in der Regel aus Metall bestehende Stempel 10 von einem hinsichtlich der Temperatur und Menge gesteuerten oder geregelten Kühlmedium durchflossen wird. In ähnlicher Weise ist auch ein Kühlkreislauf 43 für die Stützform 13 vorgesehen. Die Kühlkreisläufe 42 und 43 können einzeln oder auch zu einem gemeinsamen Kühlkreislauf zusammengefasst eingesetzt werden.

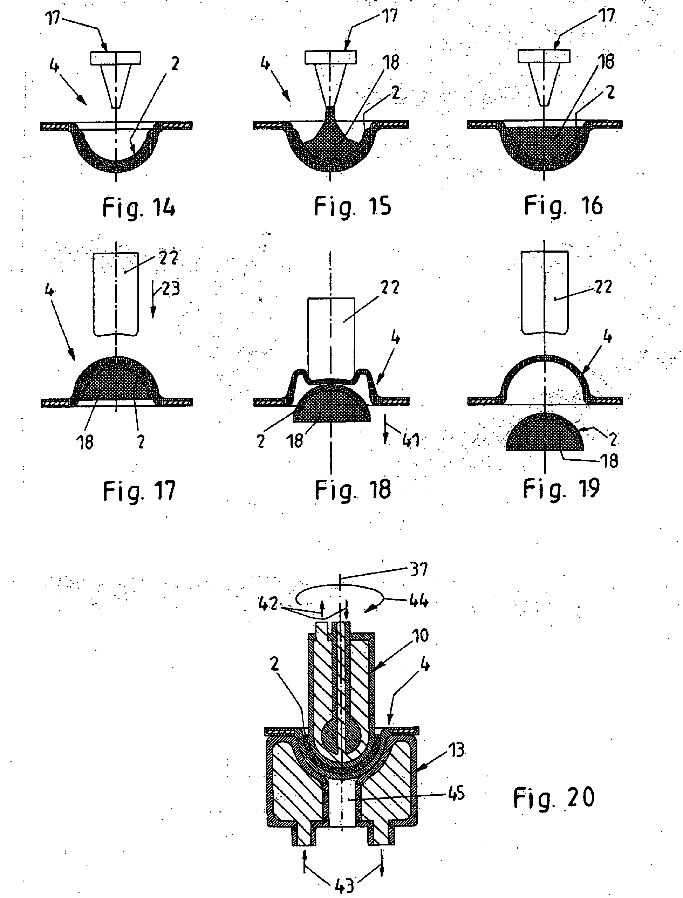

Anhand der Fig. 14-19 wird das Einfüllen einer zweiten Masse 18 in einen bereits vorher ausgebildeten schalenartigen Formkörper 2 sowie das Auswerfen des so gebildeten Produkts verdeutlicht:

Gemäß den Fig. 14 und 15 wird die Masse 18 in den verfestigten schalenartigen Formkörper 2 eingegossen. Die Masse 18 verteilt sich gemäß Fig. 16 und erstarrt in dem schalenartigen Formkörper 2 in der Form 4. Fig. 17 zeigt das anschließende Wenden der Form 4 und die Abwärtsbewegung des Auswerfers 22 gemäß Pfeil 23. Gemäß Fig. 18 wird die Form 4 durch den Auswerfer 22 teilweise durchgestülpt, wobei sich der schalenartige Formkörper 2 bzw. das Produkt insgesamt in der erstarrten Form aus der Form 4 löst und gemäß Pfeil 41 nach unten ausgeworfen wird, so dass es beispielsweise auf das Austrageband 26 (Fig. 1) gelangt. Der Auswerfer 22 wird dann, wie Fig. 19 zeigt, weiter angehoben und gelangt in seine Ausgangs- bzw. Ruhestellung.

Fig. 20 zeigt eine Ausführungsform der Elemente der Formgebung mit den beiden Kühlkreisläufen 42 und 43. Der Stempel 10 ist hier zusätzlich um die Längsachse 37 rotierend angetrieben. Der Antrieb erfolgt mit relativ niedrigen Drehzahlen gemäß Pfeil 44 und zumindest während des Verdrängungsvorgangs der eingegossenen Zuckermasse 3. Die Stützform 13 ist hier ringförmig ausgebildet, d. h. sie besitzt im Bodenbereich eine Durchbrechung 45, die nach dem Wenden der Form 4 für den Durchtritt des Auswerfers 22 genutzt werden kann. Dies bedeutet nicht notwendigerweise, dass die Stützform 13 rotationssymmetrisch ausgebildet ist. Die Stützform 13 kann so vergleichsweise länger in Kontakt zu der Form 4 gehalten werden und so eine intensivierte Kühlwirkung erbringen.

### BEZUGSZEICHENLISTE

| | | | |
|---|---|---|---|
| 1 | Vorrichtung | 11 | Pfeil |
| 2 | Formkörper | 12 | Wandung |
| 3 | Zuckermasse | 13 | Stützform |
| 4 | Form | 14 | Transportorgan |
| 5 | Transportband | 15 | Pfeil |
| 6 | Pfeil | 16 | Vertiefung |
| 7 | Umlenkrad | 17 | Gießstation |
| 8 | Umlenkrad | 18 | zweite Masse |
| 9 | Gießstation | 19 | Gießstation |
| 10 | Stempel | 20 | Masse |
| 21 | Entformungsstation | 31 | Pfeil |
| 22 | Auswerfer | 32 | Pfeil |
| 23 | Pfeil | 33 | Kern |
| 24 | Beschichtung | 34 | Mantel |
| 25 | Beschichtung | 35 | Pfeil |
| 26 | Austrageband | 36 | Pfeil |
| 27 | Pfeil | 37 | Mittelachse |
| 28 | Verstärkung | 38 | Randbereich |
| 29 | Kern | 39 | Vertiefung |
| 30 | Mantel | 40 | Rand |
| 41 | Pfeil | | |
| 42 | Kühlkreislauf | | |
| 43 | Kühlkreislauf | | |
| 44 | Pfeil | | |
| 45 | Durchbrechung | | |

## Patentansprüche

1. Verfahren zum Herstellen eines schalenartigen Formkörpers (2) aus gekochter Zuckermasse in einer membranartig ausgebildeten Form (4), indem die Zuckermasse in fließfähigem Zustand in die zumindest bereichsweise aus elastischem, rückstellfähigem Material bestehende Form (4) gegossen wird, die Form mit der Zuckermasse (3) in fließfähigem Zustand nur zu einem solchen Teil gefüllt wird, wie es der Menge der Zuckermasse zur Herstellung des schalenartigen Formkörpers (2) entspricht, die Zuckermasse mit einem in die Form eintauchenden Stempel (10) entlang der Wandung (12) der Form (4) verdrängt wird, die membranartige Form zumindest während der Verdrängung der Zuckermasse (3) durch den in die Form (4) eintauchenden Stempel (10) durch eine Stützform (13) abgestützt wird und zwischen Stempel (10) und Form (4) verfestigt wird, worauf , das Auswerfen des schalenartigen Formkörpers (2) unter Durchstülpen der Form (4) aus dem elastischen Material erfolgt.

2. Verfahren nach Anspruch 1, **dadurch gekennzeichnet, dass** die Stützform (13) vor dem Auswerfen des schalenartigen Formkörpers (2) entfernt wird.

3. Verfahren nach einem der Ansprüche 1 bis 2, **dadurch gekennzeichnet, dass** der Stempel (10) und/oder die Form (4) und/oder die Stützform (13) gekühlt wird.

4. Verfahren nach einem der Ansprüche 1 bis 3, **dadurch gekennzeichnet, dass** der schalenartige Formkörper (2) mit einem oder mehreren weiteren Massen (18, 20) gefüllt, gedeckelt oder sonst wie zu dem verzehrbaren Produkt der Süßwarenindustrie weiterverarbeitet wird.

5. Verfahren nach Anspruch 1, **dadurch gekennzeichnet, dass** der Stempel (10) zumindest während des Verdrängens der Zuckermasse (3) in der Form (4) rotierend angetrieben wird.

6. Vorrichtung zum Herstellen eines schalenartigen Formkörpers aus gekochter Zuckermasse (3) in einer zumindest bereichsweise aus elastischem, rückstellfähigem Material bestehenden membranartig ausgebildeten Form (4), die zum Einbringen der Zuckermasse in fließfähigem Zustand oben offen ausgebildet ist, wobei auf der der Zuckermasse (3) zugekehrten Seite der Form (4) ein hubartig angetriebener Stempel (10) zum temporären Verdrängen der Zuckermasse (3) in der Form (4) vorgesehen ist und auf der der Zuckermasse (3) abgekehrten Seite der Form (4) eine Stützform (13) zum Abstützen der membranartigen Form (4) während des Verdrängens der gekochten Zuckermasse (3) sowie ein hubartig angetriebener Auswerfer (22) zum Durchstülpen der membranartigen Form (4) während des Lösens des Formkörpers aus der Form (4) vorgesehen ist.

7. Vorrichtung nach Anspruch 6, **dadurch gekennzeichnet, dass** der Stempel (10) und/oder die membranartige Form (4) mit einer das Ablösen des verfestigten schalenartigen Formkörpers (2) begünstigenden Beschichtung (12, 25) versehen sind.

8. Vorrichtung nach Anspruch 6 oder 7, **dadurch gekennzeichnet, dass** der Stempel (10) und/oder die membranartige Form (4) und/oder die Stützform (13) an einen Kühlkreislauf (42, 43) angeschlossen sind.

9. Vorrichtung nach einem der Ansprüche 6 bis 8, **dadurch gekennzeichnet, dass** der Stempel (10), die Form (4) und die Stützform (13) so ausgebildet und aufeinander abgestimmt sind, dass der schalenartige Formkörper (2) eine Wandstärke von etwa 2 mm erhält.

10. Vorrichtung nach einem der Ansprüche 6 bis 9, **dadurch gekennzeichnet, dass** die Form (4) zumindest einen elastisch verformbaren Bereich aufweist, der dünnwandig ausgebildet ist, und dass die Stützform (13) ringförmig ausgebildet ist.

## Claims

1. Method of producing a shell-like form body (2) of a cooked sugar mass in a membrane-like mould (4), by pouring the liquid sugar mass (3) into the mould to only partly fill the mould as it is required for producing a shell-like form body (2), the mould (4) at least partly being made of an elastic and resilient material, dislocating the sugar mass along the wall (12) of the mould (4) by a stamp element (10), supporting the membrane-like mould with a supporting mould (13) at least during the step of dislocating the sugar mass (3), solidifying the sugar mass between the stamp element (10) and the mould (4), and ejecting the solid shell-like form body (2) by reversing the mould (4) of the elastic material.

2. The method of claim 1, **characterized in that** the supporting mould (13) is removed before the step of ejecting the shell-like solid form body (2).

3. The method of one of the claims 1 to 2, **characterized in that** the stamp element (10) and/or the mould (4) and/or the supporting mould (13) is cooled.

4. The method of one of the claims 1 to 3, **characterized in that** the shell-like form body (2) is filled, covered or otherwise completed with one or more additional masses (18, 20) to attain an edible product of the sweets industry.

5. The method of claim 1, **characterized in that** the stamp element (10) is rotatably driven at least during the step of dislocating the sugar mass (3) in the mould (4).

6. Apparatus for producing a shell-like form body of a cooked sugar mass (3) in a membrane-like mould (4) at least partly being made of an elastic and resilient material and being designed and arranged to be open on top to be filled with fluid sugar mass from above, in which a stroke-like driven stamp element (10) is arranged on the side of the mould (4) facing the sugar mass (3) to temporarily dislocate the sugar mass (3) contained in the mould (4) and a supporting mould (13) is arranged on the side of the mould (4) not facing the sugar mass (3) to support the membrane-like mould (4) during dislocating of the cooked sugar mass (3), and a stroke-like driven ejector element (22) is designed and arranged to reverse the membrane-like mould (4) during the detachment of the body out of the mould (4).

7. The apparatus of claim 6, **characterized in that** the stamp element (10) and/or the membrane-like mould (4) includes a coating (12, 25) being designed and arranged to simplify detachment of the solidified shell-like form body (2).

8. The apparatus of claim 6 or 7, **characterized in that** the stamp element (10) and/or the membrane-like mould (4) and/or the supporting mould (13) is connected to a cooling circuit (42, 43).

9. The apparatus of one of the claims 6 to 8, **characterized in that** the stamp element (10) and/or the mould (4) and/or the supporting mould (13) are designed and arranged such that the sugar mass solidifies as the shell-like form body (2) having a wall thickness of approximately 2 mm.

10. The apparatus of one of the claims 6 to 9, **characterized in that** the mould (4) includes at least a portion being elastically deformable and having thin walls, and **in that** the supporting mould (13) has an annular design.

## Revendications

1. Procédé de réalisation d'un corps (2) en sucre cuit, moulé en forme de coque, dans un moule (4) formé par une membrane, dans lequel le sucre à l'état fluide est versé dans le moule (4) réalisé au moins par zones dans un matériau élastique repositionnable, le moule est rempli par le sucre (3) à l'état fluide seulement sur une partie correspondant à la quantité de sucre pour la fabrication du corps moulé (2) en forme de coque, le sucre est refoulé le long de la paroi (12) du moule (4) au moyen d'un poinçon (10) pénétrant dans le moule, le moule formé par une membrane est supporté par un moule de support (13) au moins pendant le refoulement du sucre (3) par le poinçon (10) pénétrant dans le moule (4), et le sucre est solidifié entre le poinçon (10) et le moule (4), à la suite de quoi le corps moulé (2) en forme de coque est éjecté hors du moule (4) en matière élastique sous l'effet du retournement de ce dernier.

2. Procédé selon la revendication 1, **caractérisé en ce que** le moule de support (13) est retiré avant l'éjection du corps moulé (2) en forme de coque.

3. Procédé selon l'une quelconque des revendications 1 à 2, **caractérisé en ce que** le poinçon (10) et/ou le moule (4) et/ou le moule de support (13) sont refroidis.

4. Procédé selon l'une quelconque des revendications 1 à 3, **caractérisé en ce que** le corps moulé (2) en forme de coque est rempli par une ou plusieurs masses (18, 20) supplémentaires, est fermé par un couvercle ou est transformé d'une autre manière en un produit comestible de l'industrie de la confiserie.

5. Procédé selon la revendication 1, **caractérisé en ce que** le poinçon (10) est entraîné en rotation au moins pendant le refoulement du sucre (3) à l'intérieur du moule (4).

6. Dispositif de réalisation d'un corps en sucre cuit, moulé en forme de coque, dans un moule (4), qui est réalisé au moins par zones sous forme de membrane en matériau élastique repositionnable et qui est ouvert sur le dessus pour l'introduction du sucre à l'état fluide, sachant que sur le côté du moule (4) orienté vers le sucre (3), il est prévu un poinçon (10) entraîné en mouvement vertical pour le refoulement temporaire du sucre (3) dans le moule (4) et, sur le côté du moule (4) opposé au sucre (3), il est prévu un moule de support (13) pour supporter le moule (4) formé par une membrane pendant le refoulement du sucre cuit (3), ainsi qu'un éjecteur (22) entraîné en mouvement vertical pour le retournement du moule (4) formé par une membrane pendant le démoulage du corps moulé hors du moule (4).

7. Dispositif selon la revendication 6, **caractérisé en ce que** le poinçon (10) et/ou le moule (4) formé par une membrane sont munis d'un revêtement (12, 25) favorisant le démoulage du corps moulé (2) en forme de coque solidifié.

8. Dispositif selon la revendication 6 ou 7, **caractérisé en ce que** le poinçon (10) et/ ou le moule (4) formé par une membrane et/ ou le moule de support (13) sont raccordés à un circuit de refroidissement (42, 43).

9. Dispositif selon l'une quelconque des revendications 6 à 8, **caractérisé en ce que** le poinçon (10), le moule (4) et le moule de support (13) sont conçus et ajustés les uns aux autres de telle sorte que le corps moulé (2) en forme de coque est réalisé avec une épaisseur de paroi de 2 mm environ.

10. Dispositif selon l'une quelconque des revendications 6 à 9, **caractérisé en ce que** le moule (4) comporte au moins une zone élastiquement déformable, qui est réalisée à paroi mince, et **en ce que** le moule de support (13) est réalisé avec une forme annulaire.
